# EUROPÄISCHE PATENTSCHRIFT

(11) **EP 1 680 462 B1**
(45) Veröffentlichungstag und Bekanntmachung des Hinweises auf die Patenterteilung: **29.10.2008**
(21) Anmeldenummer: 04763862.2
(22) Anmeldetag: 06.08.2004
(51) Int. Cl.: C08J 7/04, C09D 5/24

(54) **VERFAHREN ZUR HERSTELLUNG EINES ANTISTATISCH BESCHICHTETEN FORMKÖRPERS**
METHOD FOR PRODUCING AN ANTISTATICALLY COATED MOLDED BODY
PROCEDE DE FABRICATION D'UN CORPS MOULE A REVETEMENT ANTISTATIQUE

(30) Priorität: 05.11.2003 DE 10352177
(43) Veröffentlichungstag der Anmeldung: 19.07.2006
(73) Patentinhaber: Evonik Röhm GmbH, 64293 Darmstadt (DE)
(72) Erfinder: HASSKERL, Thomas, 61476 Kronberg (DE); BECKER, Patrick, 64376 Mühltal (DE); NEEB, Rolf, 64367 Mühltal (DE); SEYOUM, Ghirmay, 63329 Egelsbach (DE)
(86) Internationale Anmeldenummer: PCT/EP2004/008827
(87) Internationale Veröffentlichungsnummer: WO 2005/047376

(56) Entgegenhaltungen:
- WO-A-03/000808
- WO-A-20/04081122
- DE-A- 10 032 136
- US-A- 5 256 484
- US-A1- 2003 173 545

## Beschreibung

### Gebiet der Erfindung

Die Erfindung betrifft ein weiteres Verfahren zur Herstellung von elektrisch leitfähig ausgerüsteten Kunststoffformkörpern, die elektrisch leitfähig ausgerüsteten Kunststoffformkörper und ihre Verwendungen.

### Stand der Technik

EP 0 514 557 B1 beschreibt eine Beschichtungslösung zur Bildung einer durchsichtigen, leitfähigen Beschichtung, bestehend aus pulverförmigen leitfähigen Partikeln z. B. auf Metalloxid-Basis z. B. Zinn-Oxid in einer Matrix aus einem thermisch härtbaren Silicapolymer-Lacksystem. Beschichtete Substrate z. B. Keramikoberflächen, können Lackschichten mit Dicken im Bereich von z. B. 500 bis 7000 Å (Ångström, 10 ⁻¹⁰ m), aufweisen. Es wird als vorteilhaft hervorgehoben, Produkte zu verwenden, in denen die leitfähigen Partikel vorwiegend als Einzelpartikel, weitgehend oder völlig frei von Aggregaten vorliegen. Silicapolymer-Lacksysteme sind zur Beschichtung von vielen Kunststoff-Substraten weitgehend ungeeignet, da sie bei sehr hohen Temperaturen gehärtet werden müssen, in der Regel sehr spröd und schlecht haftend sind.

EP-A 0 911 859 beschreibt transparente, elektrisch-leitfähige Strukturen aus einem transparenten Substrat, einer transparenten, elektrisch leitfähigen Beschichtung und einer weiteren transparenten Beschichtung. Als elektrisch leitfähige Partikel werden mit Gold oder Platin beschichtete Silberkörnchen mit einer Größe von 1 bis 100 nm in einer Bindemittelmatrix verwendet. In Vergleichsbeispielen werden unter anderem auch Partikel aus Indium-Zinn-Oxid (ITO) im thermisch härtbaren Siloxanlacksystem eingesetzt.

DE 101 29 374 beschreibt ein Verfahren zur Herstellung von Formkörpern aus Kunststoff mit elektrisch leitfähiger Beschichtung, indem man einen Formkörper einseitig mit einem Lacksystem, bestehend aus a) einem Bindemittel, b) gegebenenfalls einem Lösungsmittel, c) gegebenenfalls weiteren in Lacksystemen gebräuchlichen Additiven und d) 10 bis 300 Gew.-Teilen (bezogen auf die Komponente a)) eines elektrisch leitfähigen Metall-Oxids mit einer mittleren Teilchengröße von 5 bis 130 nm in an sich bekannter Weise beschichtet und den Formkörper vor der Aushärtung der Lackschicht so behandelt oder lagert, dass sich die Metall-Oxid-Teilchen in der Hälfte der Lackschicht, die der Grenzschicht zur Luft zugewandt ist, so anreichern, dass sich mindestens 65 % der Teilchen in dieser Hälfte der Lackschicht befinden und man danach die Lackschicht anschließend aushärtet oder aushärten lässt.

### Aufgabe

Es bestand die Aufgabe, ein weiters Verfahren zur Herstellung von Formkörpern aus Kunststoff mit elektrisch leitfähiger Beschichtung bereitzustellen, bei dem bereits mit vergleichsweise reduzierten Mengen an Metalloxid gute Leitfähigkeiten erreicht werden. Elektrisch-leitfähige Metall-Oxide, wie z. B. Indium-Zinn-Oxid (ITO), können in Pulverform in Lacksystemen verwendet werden, die zur Herstellung elektrisch-leitfähiger Beschichtungen auf Formkörpern aller Art eingesetzt werden können. Ein kommerzieller Nachteil besteht im hohen Preis der elektrisch leitfähigen Metall-Oxide, so dass derartige Beschichtungen nur bei sehr hochpreisigen Produkten angeboten werden können. Der hohe Preis z. B. von Indium-Zinn-Oxid (ITO)-Pulvern, resultiert unter anderem aus dem aufwendigen Herstellungsverfahren nach dem Sol-Gel-Prinzip, das sehr viele aufwendige Arbeitsschritte umfasst. Ferner sollte der aus DE 101 29 374 notwendige Schritt der Lagerung der bereits beschichteten Kunststoffformkörper vermieden werden, da der Kunststoffformkörper in diesem Zustand mechanisch sehr empfindlich ist. Weiter sollten Wege gefunden werden, das recht teure ITO durch preiswertere Produkte zu ersetzen, ohne die Funktionalität der Beschichtung, wie beispielsweise die elektrische Leitfähigkeit oder die Kratzfestigkeit, wesentlich zu beeinträchtigen. Ferner bestand die Aufgabe, ein Lacksystem zu entwickeln, in dem ein möglichst hoher Anteil an elektrisch leitfähigen Metall-Oxiden und an Nanopartikeln einarbeitbar ist, ohne die Viskosität so zu erhöhen, dass das Lacksystem nicht mehr verarbeitbar ist.

### Lösung

### Die Aufgabe wird gelöst durch ein

Verfahren zur Herstellung von Formkörpern aus Kunststoff mit elektrisch-leitfähiger Beschichtung, indem man einen Formkörper ein-, zwei- oder mehrseitig mit einem Lacksystem, bestehend aus
a) einem Bindemittel oder einem Bindemittelgemisch
b) gegebenenfalls einem Lösungsmittel oder einem Lösungsmittelgemisch und
c) gegebenenfalls weiteren, in Lacksystemen gebräuchlichen, Additiven und
d) einem Verdicker oder einem Verdickergemisch
e) 5 bis 500 Masse-Teilen (bezogen auf die Komponente a)) eines elektrisch leitfähigen Metall-Oxids oder aber auch Sole von Metalloxiden mit einer mittleren Primärteilchengröße von 1 bis 80 nm und einem Aggregationsgrad von 0,01 bis 99 %, wobei der Aggregationsgrad bedeutet, dass der Prozentsatz angegeben wird, zu dem die Primärpartikel aus mindestens 2 Primärteilchen bestehen.
   Die Bestimmung des Agglomerationsgrads erfolgt optisch durch ein Transmissionselektronenmikroskop am fertigen Lack. Die Begriffe "Teilchen", Primärteilchen oder Einzelteilchen", "Aggregat" und "Agglomerat" werden wie in DIN 53 206 (August 1972) definiert, verwendet.
f) und 5 bis 500 Masse-Teilen (bezogen auf die Komponente a)) Nanoteilchen mit einer mittleren Primärteilchengröße von 2 bis 100 nm
in an sich bekannter Weise beschichtet und die Lackschicht anschließend aushärtet oder aushärten lässt.

Die Erfindung betrifft weiterhin nach dem erfindungsgemäßen Verfahren herstellbare Formkörper mit elektrisch leitfähiger Beschichtung und deren Verwendungen.

### Ausführung der Erfindung

### Das Bindemittel oder das Bindemittelgemisch a)

Das Bindemittel kann entweder ein physikalisch trocknendes oder thermisch oder chemisch härtbares oder mittels energiereicher Strahlen härtbares, organisches oder gemischt organisch/anorganisches Bindemittel oder Bindemittelgemisch sein.

Ein organisches Bindemittel besteht aus organischen Monomeren, Oligomeren und/oder Polymeren. Beispiele sind: Poly(meth)acrylate, vinylische (Co)polymere, Epoxidharze, Polyurethane oder Alkydharze, vernetzende und nicht vernetzende Reaktivverdünner.
Unter Reaktivverdünner versteht man niedrigviskose Monomere, die in den Lack einpolymerisiert werden können, vernetzende Reaktivverdünner weisen zwei oder mehrere polymerisationsfähige Gruppen im Molekül auf.
Reaktivverdünner wären beispielsweise Butylacrylat oder Hydroxyethylmethacrylat, ein vernetzender Reaktivverdünner ist beispielsweise Hexandioldi(meth)acrylat.
Ein gemischt organisch/anorganisches Bindemittel kann z. B. sein: Polysiloxane, Silan-Cokondensate, Silikone oder Blockcopolymere der vorstehenden Verbindungen mit organischen Polymeren.
Weitere Beispiele sind Hybridpolymere, die als Mischung ihrer monomeren und/oder oligomeren Komponenten eingesetzt werden. Dies können Kombinationen von (Meth)acrylaten mit Epoxiden oder Isocyanaten und jeweils zugehörigen Härtern sein.

Geeignete Monomere sind z.B. gamma-Methacryloxypropyltrimethoxysilan (Silquest A174 NT), Hexandioldiacrylat, Trimethylolpropantriacrylat, Serpol QMA 189 (Servo Delden BV, NL), Dipropylenglykoldiacrylat, Pentaerythrittritetraacrylat, Bisomer PPA6E, Polypropylenglykolmonoacrylat, Sartomer 335, Ditrimethylolpropantetraacrylat, Sartomer CD 9038, ethoxyliertes Bisphenoldiacrylat, Sartomer CD 406, Cyclohexandimethanoldiacrylat, Sartomer SR 335, Laurylacrylat, Sartomer SR 285, Tetrahydrofurfurylacrylat, Sartomer SR 339, 2-Phenoxyethylacrylat.

### Das Lösungsmittel b)

Im Lacksystem gegebenenfalls enthaltene Lösungsmittel können Alkohole, Etheralkohole oder Esteralkohole sein. Diese können auch untereinander oder gegebenenfalls mit weiteren Lösungsmitteln wie aliphatischen oder aromatischen Kohlenwasserstoffen oder Estern gemischt werden.
Bevorzugte Lösungsmittel sind Alkohole, Etheralkohole oder deren Mischungen, Mischungen von Alkoholen mit weiteren Lösemitteln, wie z.B. Butylacetat, Diacetonalkohol und Toluol.

### Die Additive c)

Im Lacksystem gegebenenfalls enthaltene gebräuchliche Additive c) können z. B. Farbstoffe, Verlaufshilfsmittel, Benetzungsmittel, Dispergieradditive, Antioxidantien, Photoinitiatoren, Reaktivverdünner, Entschäumer, Entlüfter, sterisch gehinderte Amin-Lichtstabilisatoren (HALS), Pigmente oder UV-Absorber sein. Unter den oberflächenaktiven Mitteln sind besonders bevorzugt die Produkte Byk 045, Byk 335, Efka 83, Tego 440, Silan GF16 (Wacker). Bevorzugte UV-Absorber sind: Norbloc 7966, Bis-DHB-A (Riedel de Haen), CGL 104 (Ciba), 3-(2-Benzotriazolyl)-2-hydroxy-5-tert.-octyl-benzylmethacrylamid, UVA 635-L von BASF, Uvinul N35, die Tinuvine 1130, 329 und 384. Als sterisch gehinderte Aminlichtstabilisatoren werden bevorzugt die Tinuvine 770, 440, 144, 123, 765, 292, 268 eingesetzt. Die gebräuchlichen Additive sind z. B. in Lehrbüchern wie Brock, Groteklaes, Mischke, "Lehrbuch der Lacktechnologie" 2. Auflage, Hannover, Vincentz-Verlag 1998, beschrieben.

### Der Verdicker oder das Verdickergemisch d)

Als Verdicker oder das Verdickergemisch können geeignete Polymere, wie beispielsweise das Produkt PLEX^{®} 8770 F, hergestellt und vertrieben von der Röhm GmbH & Co. KG, verwendet werden. Das Produkt PLEX^{®} 8770 F ist ein hochmolekulares PMMA mit der Zusammensetzung von ca. 75 Masse-% Methacrylsäuremethylester und ca. 25 Masse-% Butylacrylat. Die Viskositätszahl J beträgt ca. 11. (bestimmt in Chloroform bei 20 Grad Celsius) Das Produkt wird durch Perlpolymerisation hergestellt, als Initiator wird 2,2'-Azobis-(isobutyronitril) verwendet. Die Methoden der Perlpolymerisation sind dem Fachmann bekannt.

Weitere geeignete Verdicker sind: oligomere Epoxyacrylate wie Ebecryl 605, Ebecryl 608, Urethanacrylate wie Ebecryl 210, Ebecryl 264, Ebecryl 284, Ebecryl 5129, Ebecryl 1290; Siliconacrylate wie Ebecryl 350 oder Ebecryl 360; Polyesteracrylate wie Ebecryl 440, Epoxyacrylate wie Jägalux 3300, Polyesteracrylate wie Jägalux 1300; Polyethylenglykoldiacrylate wie EM227 von IGM Resin BV, Waalwijk, NL. Die Produkte mit dem Namen Ebecryl sind von Fa. UCB, Kerpen erhältlich.

In einer besonderen Ausführungsform kann der Verdicker auch selbst reaktiv sein und zum Beispiel durch thermische Nachhärtung eine weitere Vernetzung auslösen. Dies ist insbesondere dann vorteilhaft, wenn flexible oder thermoplastische Substrate beschichtet werden und diese nach der Beschichtung noch z.B. thermisch verformt, laminiert oder geprägt werden sollen. Dabei kann der Vernetzergehalt z.B. in einem strahlenhärtbaren Lack so eingestellt werden, dass in der UV-Härtung zunächst eine gewisse Vernetzung erfolgt, die aber nur so weit geht, dass der Lack bei Verformung nicht abreißt, nicht aufreißt und seine Haftung auch bei Dehnung oder Stauchung bis zu einem gewissen Grad nicht verliert. Während der z.B. thermischen Verformung oder Prägung findet eine Nachhärtung durch die im Verdicker enthaltenen reaktiven Gruppen statt. Dabei wird die endgültige Vernetzungsdichte erreicht und die Kratzfestigkeit des Systems noch einmal verbessert. Beispiele für reaktive Verdicker sind aliphatische oder aromatische Verbindungen mit reaktiven Gruppen, die untereinander z.B. bei Wärmeeinwirkung reagieren können. Dies sind z.B. schwefelhaltige Gruppen, wie Mercapto- und Disulfidgruppen, Epoxidgruppen, Aminogruppen, Alkohole, saure Gruppen, Isocyanate oder verkappte Isocyanate, oder weitere hier nicht aufgeführte Systeme, die nach einem Dual Cure Mechanismus einen zweiten Härtungsschritt nach der primären Strahlungshärtung durchlaufen.

Neben den reaktiven, vernetzbaren Verdickern können auch nicht-reaktive Vernetzer allein oder in Kombination mit den reaktiven Vernetzern verwendet werden, wobei sich die Flexibilität der Beschichtung durch die Verwendung eines nicht-vernetzbaren Verdickers günstig beeinflussen läßt. Als Vernetzer kommen die üblichen mehrfunktionellen (Meth)acrylate in Frage, wie beispielsweise
a) Difunktionelle (Meth)acrylate, wie beispielsweise Verbindungen der allgemeinen Formel: 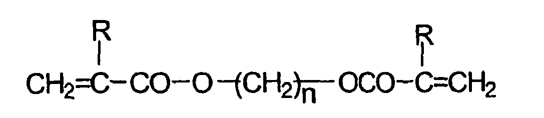 worin R Wasserstoff oder Methyl ist und n eine positive ganze Zahl zwischen 3 und 20, wie z. B. Di(meth)acrylat des Propandiols, Butandiols, Hexandiols, Octandiols, Nonandiols, Decandiols und Eicosandiols oder Verbindungen der allgemeinen Formel: 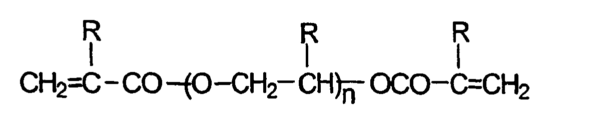 worin R Wasserstoff oder Methyl ist und n eine positive ganze Zahl zwischen 1 und 14 bedeutet, wie z. B. Di(meth)acrylat des Ethylenglycols, Diethylenglycols, Triethylenglycols, Tetraethylenglycols, Dodecaethylenglycols, Tetradecaethylenglycols, Propylenglycols, Dipropylglycols und Tetradecapropylenglycols; und Glycerindi(meth)acrylat, 2,2'-Bis[p-(γ-methacryloxy-β-hydroxypropoxy)-phenylpropan] oder Bis-GMA, Biphenol-A-dimethacrylat, Neopentylglycoldi(meth)acrylat, 2,2'-Di(4-methacryloxypolyethoxyphenyl)propan mit 2 bis 10 Ethoxygruppen pro Molekül und 1,2-Bis(3-methacryloxy-2-hydroxypropoxy)butan oder ferner
(b) Tri- oder mehrfachfunktionelle (Meth)acrylate, wie beispielsweise Trimethylolpropantri(meth)acrylate und Pentaerythritoltetra(meth)acrylat.

Der Lack kann dann z.B. auch so ausgeführt werden, dass eine Selbstheilung bei Verkratzung auftritt. Dies gelingt z.B. durch Erniedrigung des Vernetzungsgrads und Steigerung der Elastizität durch Verwendung von Oligo- und Polymeren mit geeigneten Substituenten. Beispiele für elastifizierende Monomere sind Acrylate oder Methacrylate mit aliphatischen mittel- oder langkettigen Resten wie z.B. Isobutylgruppen im Alkoholteil der Estergruppe.

### Das Lacksystem aus a), b), c) und d)

Ein geeigneter physikalisch trocknender Lack enthält z. B. 30 Gew.-% Polymer, z. B. Polymethylmethacrylat-(Co)polymer und 70 Gew.-% Lösungsmittel, z. B. Methoxypropanol und Butylacetat. Nach Auftrag in dünner Schicht härtet der Lack durch die Verdunstung des Lösungsmittels selbständig aus.

Ein geeigneter thermisch härtbarer Lack kann z. B. ein Polysiloxanlack sein, der durch partielle Hydrolyse und Kondensation von Alkylalkoxysilanen erhalten werden kann. Die Aushärtung erfolgt nach dem Verdunsten gegebenenfalls verwendeter Lösungsmittel durch gegebenenfalls 20 minutiges bis mehrstündiges Erhitzen auf z. B. 60 bis 120 °C.

Ein geeignetes chemisch härtbares Lacksystem kann z. B. aus einem Gemisch von Polyisocyanaten und Polyolen bestehen. Nach dem Zusammenbringen der reaktiven Komponenten härtet das Lacksystem selbständig innerhalb eines Zeitraums von wenigen Minuten bis Stunden aus.

Ein geeignetes mittels Strahlen härtbares Lacksystem besteht z. B. aus einem Gemisch von gegebenenfalls mehrfach ungesättigten radikalisch polymerisierbaren vinylisch ungesättigten Verbindungen, z. B. (Meth)acrylatverbindungen. Die Härtung erfolgt nach Einwirkung energiereicher Strahlung, z. B. UV-Strahlung oder Elektronenstrahlen, gegebenenfalls nach Zusatz eines durch die Strahlung aktivierbaren Polymerisationsinitiators. Beispiele sind Kratzfestlacke, wie sie in der DE-A 195 071 74 beschrieben sind.

Die Bestandteile a), b), und c) können dabei ein Lacksystem auf Basis von Poly(meth)acrylaten, Polysiloxanen, Polyurethanen, Epoxidharzen oder radikalisch polymerisierbaren, gegebenenfalls mehrfunktionellen, vinylischen Monomeren darstellen.

Besonders bevorzugt ist ein Lacksystem, welches ein Bindemittel enthält, das im ausgehärteten Zustand einen Gehalt an funktionellen polaren Gruppen von mindestens 5, bevorzugt 10 bis 25 mol-% bezogen auf das Bindemittel aufweist.

Eine geeignete Beschichtungszusammensetzung kann bestehen aus
aa) 70 - 95 Gew.-%, bezogen auf die Summe der Komponenten aa) bis ee), eines Gemisches aus Polyalkylenoxid-di(meth)acrylaten der Formel (I)

   H₂C=C(R)-C(O)-O-[CH₂-CH₂-O]ₙ-C(O)-C(R)=CH₂ (I)

   mit n = 5 - 30
   und R = H oder CH₃
   wobei
   aa1) 50 - 90 Gew.-% des Gemisches der Polyalkylenoxid-di(meth)acrylate der Formel (I) von Polyalkylenoxid-diolen mit einem mittleren Molekulargewicht (Mw) von 300 - 700 und
   aa2) 50 - 10 Gew.-% des Gemisches der Polyalkylenoxid-di(meth)acrylate der Formel (I) von Polyalkylenoxid-diolen mit einem mittleren Molekulargewicht (Mw) von 900 - 1300 gebildet werden
bb) 1 - 15 Gew.-%, bezogen auf die Summe der Komponenten aa) bis ee), eines Hydroxyalkyl(meth)acrylats der Formel

   H₂C=C(R)-C(O)-O-[CH₂]ₘ-OH (II)

   mit m = 2 - 6
   und R = H oder CH₃
cc) 0 - 5 Gew.-%, bezogen auf die Summe der Komponenten aa) bis ee), eines Alkanpolyol-poly(meth)acrylats als Vernetzer
dd) 0,1 - 10 Gew.-%, bezogen auf die Summe der Komponenten aa) bis ee), eines oder mehrerer UV-Polymerisationsinitiatoren sowie
ee) gegebenenfalls weiteren üblichen Additiven für UV-härtbare Beschichtungen, wie Beschleunigern, z. B. Aminbeschleunigern, UV-Absorbern oder Gemischen/Kombinationen von Absorbern und/oder Additiven für Verlauf und Rheologie
ff) 0 - 300 Gew.-%, bezogen auf die Summe der Komponenten aa) bis ee), eines leicht durch Verdunstung entfernbaren Lösungsmittels und/oder 0 - 30 Gew.-%, bezogen auf die Summe der Komponenten aa) bis ee), eines monofunktionellen Reaktivverdünners.

Das beschriebene Lacksystem ist Gegenstand der DE-A 100 02 059 der Röhm GmbH & Co. KG vom 18.01.2000.

Eine Rezeptur mit Verdicker hat beispielsweise die folgende Zusammensetzung:
aa) 70 - 95 Gew.-%, bezogen auf die Summe der Komponenten aa) bis ff), eines Gemisches aus Polyalkylenoxid-di(meth)acrylaten der Formel (I)

   H₂C=C(R)-C(O)-O-[CH₂-CH₂-O]ₙ-C(O)-C(R)=CH₂ (I)

   mit n = 5 - 30
   und R = H oder CH₃
   wobei
   aa1) 50 - 90 Gew.-% des Gemisches der Polyalkylenoxid-di(meth)acrylate der Formel (I) von Polyalkylenoxid-diolen mit einem mittleren Molekulargewicht (Mw) von 300 - 700 und
   aa2) 50 - 10 Gew.-% des Gemisches der Polyalkylenoxid-di(meth)acrylate der Formel (I) von Polyalkylenoxid-diolen mit einem mittleren Molekulargewicht (Mw) von 900 - 1300 gebildet werden
bb) 1 - 15 Gew.-%, bezogen auf die Summe der Komponenten aa) bis ff), eines Hydroxyalkyl(meth)acrylats der Formel

   H₂C=C(R)-C(O)-O-[CH₂]ₘ-OH (II)

   mit m = 2 - 6
   und R = H oder CH₃
cc) 0 - 5 Gew.-%, bezogen auf die Summe der Komponenten aa) bis ff), eines Alkanpolyolpoly(meth)acrylats als Vernetzer
dd) 0,1 - 10 Gew.-%, bezogen auf die Summe der Komponenten aa) bis ff), eines oder mehrerer UV-Polymerisationsinitiatoren sowie
ee) gegebenenfalls weiteren üblichen Additiven für UV-härtbare Beschichtungen, wie Beschleunigern, Cokatalysatoren, UV-Absorbern und/oder Additiven für Verlauf und Rheologie
ff) 0 - 300 Gew.-%, bezogen auf die Summe der Komponenten aa) bis ff), eines leicht durch Verdunstung entfernbaren Lösungsmittels und/oder 0 - 30 Gew.-%, bezogen auf die Summe der Komponenten a) bis e), eines monofunktionellen Reaktivverdünners.
gg) 0,5 -50 % Gew.-%, bezogen auf die Summe der Komponenten aa) bis ff), eines Verdickers oder eines Verdickergemischs.

Derartige Lacksysteme können durch ihren vergleichsweise erhöhten Gehalt an funktionellen polaren Gruppen Wasser aufnehmen und werden z. B. als Beschichtungen für Motorradhelmvisiere eingesetzt, um ein Beschlagen der Visierscheibe von innen zu verhindern. In Kombination mit dem elektrischleitfähigen Metall-Oxid führt die Wasseraufnahme, die praktisch immer aus der Umgebung stattfindet, zu einer nochmals verbesserten elektrischen Leitfähigkeit der Beschichtung. Die erfindungsgemäßen Lacke haften trotz Wasseraufnahme gut auf Kunststoffsubstraten und bleiben transparent.

### Das elektrisch leitfähige Metalloxid e)

Geeignete elektrisch leitfähige Metall-Oxide e) haben eine Primärteilchengröße im Bereich von 1 - 80 nm. Die Metall-Oxide e) können im undispergierten Zustand auch als Aggregate und Agglomerate von Primärteilchen und Aggregaten vorliegen und hierbei eine Teilchengröße der Agglomerate von bis zu 2000 oder bis zu 1000 nm aufweisen. Die Aggregate haben eine Größe von bis zu 500 nm, bevorzugt bis zu 200 nm.

Die mittlere Teilchengröße der Metall-Oxid-Primärteilchen kann mit Hilfe des Transmissions-Elektronenmikroskops ermittelt werden und liegt bei den Primärteilchen im allgemeinen im Bereich von 5 bis 50, bevorzugt von 10 bis 40 und besonders bevorzugt von 15 bis 35 nm. Weitere geeignete Bestimmungsmethoden für die mittlere Teilchengröße sind die Brunauer-Emmett-Teller-Adsorptionsmethode (BET) oder die Röntgen-Diffraktometrie (XRD). Die Primärteilchen können als Aggregate oder als Agglomerate vorliegen. Unter Aggregaten versteht man Sekundärteilchen, die über Sinterbrücken dauerhaft zusammengefügt sind. Durch Dispergierprozesse sind Aggregate nicht trennbar.

Geeignete Metall-Oxide sind z. B. Antimon-Zinn-Oxid- oder Indium-Zinn-Oxid-Nanomaterialien (ITO), die eine besonders gute elektrische Leitfähigkeit aufweisen. Geeignet sind auch dotierte Varianten der genannten Metall-Oxide. Entsprechende Produkte werden nach Fällungs- oder dem Sol-Gel-Verfahren in hoher Reinheit erhalten und sind von verschiedenen Herstellern kommerziell erhältlich. Die mittleren Primärteilchengrößen liegen im Bereich von 5 bis 80 nm. Die Produkte enthalten einen bestimmten Anteil von aus Einzelteilchen zusammengesetzten Aggregaten und Agglomeraten. Unter Agglomeraten versteht man durch van-der-Waals-Kräfte zusammengehaltene Sekundärteilchen, die durch Dispergierprozesse trennbar sind.

Besonders bevorzugt wird ein Indium-Zinn-Oxid Pulver verwendet, welches einen Anteil von aggregierten Partikeln mit einer Teilchengröße von 50 bis 200 nm von 10 bis 80, bevorzugt 20 bis 60 Vol.-% aufweist. Der Vol-%-Anteil kann mit Hilfe eines Partikel-Analysatorgerätes (z. B. Laser Particle Analyzer der Fa. Coulter oder BI-90 Particle Sizer der Fa. Brookhaven) bestimmt werden, indem mittels dynamischer Lichtstreuung ein volumengemittelter oder ein intensitätsgemittelter Durchmesser bestimmt wird.

Ein geeignetes Indium-Zinn-Oxid Pulver kann mittels des Aerosil-Herstellungsverfahrens erhalten werden, indem man die entsprechenden Metallchlorid-Verbindungen in einer heißen Flamme in die Metall-Oxide überführt.

Bei der Einarbeitung des Indium-Zinn-Oxid Pulvers in das Lacksystem können die agglomerierten Partikel teilweise wieder in Aggregate von wenigen Einzelteilchen und in Einzelteilchen (Primärteilchen) aufgehen. Der Anteil der aggregierten Partikel mit einer Teilchengröße von 50 bis 200 nm soll bevorzugt nicht unter 5, bevorzugt nicht unter 10 % fallen. Günstig ist ein Anteil von kettenförmig aufgereihten agglomerierten Partikeln von 25 bis 90 % im Lacksystem. Dabei können die kettenförmigen Aggregate auch verzweigt sein oder als dreidimensionale Gebilde von aufgereihten Partikeln vorliegen

Elektronenmikroskopisch ist sichtbar, dass die Aggregate untereinander Brücken bilden.

### Herstellung von Indium-Zinn-Oxid (ITO) Pulver nach dem Aerosilverfahren

Die Herstellung von Indium-Zinn-Oxid Pulver nach dem Aerosilverfahren ist Gegenstand der Patentanmeldung EP 127 0511 der Degussa AG (Standort Hanau-Wolfgang, Deutschand).
Die genannte Patentanmeldung beschreibt ein Verfahren zur Herstellung der Indium-Zinn-Oxide, wobei man eine Lösung eines Indiumsalzes mit einer Lösung eines Zinnsalzes vermischt, gegebenenfalls eine Lösung eines Salzes mindestens einer Dotierungskomponente hinzufügt, dieses Lösungsgemisch zerstäubt, das zerstäubte Lösungsgemisch pyrolysiert und das erhaltene Produkt von den Abgasen abtrennt.

Als Salze können anorganische Verbindungen wie z.B. Chloride, Nitrate und metallorganische Precursoren wie z.B. Acetate, Alkoholate eingesetzt werden.

Die Lösung kann gegebenenfalls Wasser, wasserlösliche, organische Lösungsmittel wie Alkohole zum Beispiel Ethanol, Propanol und/oder Aceton enthalten.

Die Zerstäubung der Lösung kann mittels Ultraschallvernebler, Ultraschallzerstäuber, Zweistoffdüse oder Dreistoffdüse erfolgen.
Bei der Verwendung des Ultraschallverneblers oder Ultraschallzerstäubers kann das erhaltene Aerosol mit dem Trägergas und/oder N2/O2 Luft das der Flamme zugeführt wird, vermischt werden.

Bei der Verwendung der Zweistoff- oder Dreistoffdüse kann das Aerosol direkt in die Flamme eingesprüht werden.

Auch mit Wasser nichtmischbare organische Lösungsmittel, wie beispielsweise Ether, können eingesetzt werden.

Die Abtrennung kann mittels Filter oder Zyklon erfolgen.

Die Pyrolyse kann in einer Flamme, erzeugt durch Verbrennen von Wasserstoff/Luft und Sauerstoff, erfolgen. Anstelle von Wasserstoff kann auch Methan, Butan und Propan eingesetzt werden.

Die Pyrolyse kann weiterhin mittels eines von außen beheizten Ofens erfolgen. Ebenso kann ein Fließbett-Reaktor, ein Drehrohr oder ein Pulsationsreaktor verwendet werden.
Das erfindungsgemäße Indium-Zinn-Oxid kann beispielsweise mit den folgenden Stoffen in Form der Oxide und/oder der elementaren Metalle dotiert sein:
Aluminium, Yttrium, Magnesium, Wolfram, Silizium, Vanadium, Gold, Mangan, Kobalt, Eisen, Kupfer, Silber, Palladium, Ruthenium, Nickel, Rhodium, Cadmium, Platin, Antimon, Osmium, Cer, Iridium, Zirkon, Titan, Calcium, Kalium, Magnesium, Natrium, Tantal, oder Zink, wobei als Ausgangsstoff die entsprechenden Salze eingesetzt werden können. Besonders bevorzugt kann eine Dotierung mit Kalium, Platin oder Gold sein.

Das erhaltene Indium-Zinn-Oxid (ITO) kann z. B. die folgenden physikalisch chemischen Parameter besitzen:

| | |
|---|---|
| Mittlere Primärteilchengröße (TEM) | 1 bis 200nm, bevorzugt 5 bis 50nm |
| BET-Oberfläche (DIN 66131) | 0,1 bis 300 m²/g |
| Struktur (XRD) | kubisches Indiumoxid |
| Mesoporen nach BJH-Verfahren DIN 66134 | 0,03 ml bis 0,30 ml/g |
| Makroporen (DIN 66133) | 1,5 bis 5,0 ml/g |
| Schüttdichte (DIN-ISO 787/11) | 50 bis 2000 g/l |

### Die Nanoteilchen e)

Es wurde gefunden, dass Lacke mit einem Gehalt von 0,1 bis 50 Masse-% (inerten) Nanopartikeln und 30 bis 80 Masse-% ITO jeweils bezogen auf Trockenfilm (das ist die Zusammensetzung des Lacks ohne die Lösemittel) (Komponenten a), c), d), e) und f) gut aushärtbare Lacke ergeben. Bevorzugt ist eine Zusammensetzung von ca. 20 - 40 Masse-% ITO und 20 - 40 Masse-% inerte Nanopartikel. Die Lacke sind mechanisch stabil und haften gut auf dem Kunststoffsubstrat.

Überraschenderweise haben Lacke mit einem Gehalt an inerten anorganischen Teilchen, wie z.B. SiO₂-Nanopartikel, eine gute Haftung und eine unvermindert gute elektrische Leitfähigkeit.

Die SiO₂-Nanopartikel werden in an sich bekannter Weise hergestellt und z. B. unter der Marke Highlink OG von der Clariant GmbH in den Handel gebracht. Ebenfalls geeignet sind Produkte der Firma Hanse-Chemie, Geesthacht mit dem Handelsnamen Nanocryl.

Unter inerten Nanopartikeln versteht man neben den bereits erwähnten Highlink OG folgenden Stoffe und Stoffklassen: Organosole und Kieselsole, die im wesentlichen aus SiO₂ oder Al₂O₃ oder Kombinationen davon bestehen. Ebenfalls geeignet sind weitere oxidische Nanopartikel wie Zirkonoxid, Titandioxid, Ceroxid, Eisenoxid. Es können auch feinteilige destrukturierte pyrogene Kieselsäuren eingesetzt werden. Diese unterscheiden sich von den klassischen pyrogenen Kieselsäuren dadurch, dass sie nur noch in vergleichsweise geringem Umfang zur Verdickung des Lacks beitragen. Beispiele sind die Produkte Aerosil 7200 und Aerosil 8200 der Firma Degussa AG.

Weiter kann man auch funktionelle Nanopartikel in den Lack einarbeiten, die zur elektrischen Leitfähigkeit in gleichem oder schwächerem Umfang als Indiumzinnoxid beitragen. Geeignet sind z.B. Antimonzinnoxid oder Zinkoxid. Unter funktionellen Nanopartikeln versteht man im Sinne der Erfindung solche Partikel, die die Leitfähigkeit des Gesamtkomposits verbessern oder aufrecht erhalten, indem sie sich an der Leitung des elektrischen Stroms beteiligen.

Ein hier nicht gemeinter indirekter Beitrag kann auch dadurch erfolgen, dass die inerten Nanopartikel durch ihre Anwesenheit die funktionellen Nanopartikel in leiterbahnähnliche Strukturen verdrängen, wodurch die Leitfähigkeit sogar verbessert wird. Ein Beispiel dafür ist ein Lack aus je:
3g Indiumzinnoxid
3 g SiO2-Nanopartikeln (13 nm, Highlink OG 502-31) (inerte Nanopartikel)
3 g Acrylatgemisch (Zusammensetzung siehe hinten.)
7 g Isopropanol
0,08 g Silan GF 16 (Wacker)
und 2 % Photoinitiator bezogen auf Acrylat

Dieser Lack ergibt nach UV-Härtung eine antistatische Schicht mit einem Oberflächenwiderstand < 10 exp 6 Ohm/square.
In einem weiteren Beispiel wurde wie zuvor verfahren, abweichend wurden jedoch Nanopartikel mit 9 nm Teilchengröße eingesetzt. Man erhielt das gleiche Resultat. Zum Vergleich wurde ein Lack mit gleicher ITO-Konzentration, jedoch ohne Nanopartikel hergestellt. Anstelle der inerten Nanopartikel wurde Acrylat eingesetzt. Man findet einen Oberflächenwiderstand von 10 exp 9 Ohm/square.

### Die beschichtbaren Formkörper

Geeignete beschichtbare Formkörper bestehen aus Kunststoff, bevorzugt aus einem thermoplastischen oder thermisch verformbaren Kunststoff.

Geeignete thermoplastische Kunststoffe sind z. B. Acrylnitril-Butadien-Styrol (ABS), Polyethylenterephthalate, Polybutylenterephthalate, Polyamide, Polyimide, Polystyrole, Polymethacrylate, Polycarbonate, schlagzäh modifiziertes Polymethylmethacrylat oder sonstige Mischungen (Blends) aus zwei oder mehreren thermoplastischen Kunststoffen. Polyolefine (Polyethylene oder Polypropylene oder Cycloolefincopolymere, beispielsweise Copolymere aus Ethylen und Norbornen) sind nach geeigneter Vorbehandlung, wie beispielsweise Corona-Behandlung, Flämmen, Plasmaspritzen oder Ätzen ebenfalls beschichtbar.

Bevorzugt sind die transparenten Kunststoffe. Besonders bevorzugt als beschichtbares Substrat ist ein Formkörper aus extrudiertem oder gegossenem Polymethacrylat-Kunststoff wegen der hohen Transparenz dieses Kunststoff-Typs. Polymethylmethacrylat besteht aus mindestens 80, bevorzugt 85 bis 100 Gew.-% Methylmethacrylat-Einheiten, Gegebenenfalls können weitere radikalisch polymerisierbare Comonomere wie C₁- bis C₈-Alkyl(meth)acrylate enthalten sein. Geeignete Comonomere sind z. B. Ester der Methacrylsäure (z. B. Ethylmethacrylat, Butylmethacrylat, Hexylmethacrylat, Cyclohexylmethacrylat), Ester der Acrylsäure (z. B. Methylacrylat, Ethylacrylat, Butylacrylat, Hexylacrylat, Cyclohexylacrylat) oder Styrol und Styrolderivate, wie beispielsweise α-Methylstyrol oder p-Methylstyrol.

Gegossenes Polymethylmethacrylat ist sehr hochmolekular und deshalb nicht mehr thermoplastisch verarbeitbar. Es ist jedoch thermisch verformbar (thermoelastisch).

Die zu beschichtenden Formkörper können eine beliebige Form aufweisen. Bevorzugt sind jedoch flächige Formkörper, da sich diese besonders einfach und effektiv einseitig oder beidseitig beschichten lassen. Flächige Formkörper sind z. B. massive Platten oder Hohlkammerplatten wie Stegplatten bzw. Stegdoppelplatten oder Stegmehrfachplatten. Geeignet sind z. B. auch Wellplatten.

Die zu beschichtenden Formkörper können eine matte, glatte oder strukturierte Oberfläche aufweisen.

### Lack, Herstellverfahren und Rezeptur:

### Lackbasis:

Geeignete Lacke werden z.B. in DE 101 29 374 genannt. In einer besonders bevorzugten Ausführungsform werden strahlenhärtbare Lacke eingesetzt. Strahlenhärtbare Lacke haben gegenüber physikalisch trocknenden, chemisch härtenden oder thermisch härtenden Systemen den Vorteil, innerhalb von Sekunden vom flüssigen in den festen Zustand zu übergehen, bei entsprechender Vernetzung einen chemikalienbeständigen, kratzfesten Überzug zu bilden und auf vergleichsweise kleinem Raum gehandhabt zu werden. Durch die kurze Zeit zwischen Beschichtungsauftragung und Lackhärtung kann eine unerwünschte Sedimentation der spezifisch schweren Metalloxidteilchen im Lack weitestgehend verhindert werden, wenn die Viskosität des Lacks ausreichend hoch eingestellt wird.

### UV-härtbarer Lack

Der Lack ohne ITO-Zusatz muss zur Dispergierung des ITOs und der Nanopartikel e) niederviskos sein (Parameter), damit die Füllstoffmenge von 40 - 50 %, ggf. auch bis zu 70 % ITO in den Lack eingebracht werden kann und immer noch eine ausreichende Verarbeitbarkeit, Dispergierbarkeit und Applizierbarkeit gegeben ist. Die Viskosität des Lacks beträgt beispielsweise 4, 5 mPa·s. Dies kann z.B. durch Auswahl geeigneter niederviskoser Reaktivverdünner oder durch Zusatz von Lösemitteln, wie z.B. Alkoholen geschehen. Gleichzeitig muss durch Zusatz geeigneter Verdicker ein Absetzen der ITO-Partikel im Lack wirksam verhindert werden. Dies kann z.B. durch Zusatz geeigneter Polymere geschehen. Ein Beispiel für geeignete Polymere sind Polymethacrylate, z.B. PLEX 8770 F, oder Polymethacrylate mit funktionellen Gruppen; weitere geeignete Polymere oder Oligomere werden bereits im Kapitel "Das Lacksystem aus a), b) und c)" genannt. Geeignete Polymere zeichnen sich durch eine gewisse Polarität aus wodurch sie mit den anderen Bestandteilen des Lacks und mit der polaren Oberfläche des ITO wechselwirken können. Vollständig unpolare Poly- oder Oligomere oder Poly- und Oligomere mit einer geringen Anzahl von polaren Gruppen sind ungeeignet zur Verdickung, da sie nicht mit den anderen Lackbestandteilen wechselwirken können und mit dem Lack unverträglich sind. Ausreichend polare Oligo- oder Polymere enthalten polare Gruppen, ausgewählt aus der Gruppe Alkohol, Ether, Polyether, Ester, Polyester, Epoxid, Silanol, Silylether, Siliziumverbindungen mit substituierten aliphatischen oder aromatischen Resten, Keton, Harnstoff, Urethan, Halogen, Phosphat, Phosphit, Sulfat, Sulfonat, Sulfit, Sulfid, Amin, Polyamin, Amid, Imid, Carbonsäure, Schwefel-, Stickstoff- und Sauerstoffheterocyclen, Phenyl und substituierte aromatische Gruppen, mehrkernige Aromaten inklusive solcher mit Heteroatomen im Ring. Sehr polare Oligo- oder Polymere sind ebenfalls ungeeignet, da ihre Wirkung auf die Eigenschaften des fertigen Lacks ungünstig ist. Zu den ungeeigneten stark polaren Gruppen zählen Polysäuren oder Salze von Mehrfachsäuren. Ungeeignete Gruppen zeichnen sich oft durch eine erhöhte Wasserlöslichkeit oder -quellbarkeit aus. Die Konzentration der geeigneten polaren Gruppen muss so gewählt werden, dass die Quellbarkeit des Lacks ein gewisses Maß nicht überschreitet. Die geeigneten polaren Gruppen werden daher in einer Konzentration eingesetzt, die gewährleistet, dass der Lack nicht wasserlöslich und im wesentlichen nicht quellbar ist. Dies ist gewährleistet, wenn der molare Anteil der polaren Gruppen zwischen 0,4 und 100 Milliäquivalent pro 100 g des oben genannten Polymeren beträgt. Als polare Gruppen sind Hydroxyl-, Carboxyl-, Sulfonyl-Carbonsäureamid-, Nitril- und Silanol-Gruppen zu nennen. Die polaren Gruppen unterscheiden sich in ihrer Wirksamkeit. Diese nimmt in der Reihenfolge Nitril < Hydroxyl < primäres Carbonsäureamid < Carboxyl < Sulfonyl < Silanol zu. Je stärker die polarisierende Wirkung ist, umso geringer ist der erforderliche Gehalt in dem Polymer.

Besonders geeignete Verdicker sind Systeme, die nicht migrieren können. Solche Systeme können z.B. durch Anbindung an den Lack fixiert werden. Dies kann durch physikalische oder chemische Anbindung an den Lack, z.B. durch Einpolymerisieren geschehen. Ganz besonders bevorzugt sind oligo- oder polymere, einpolymerisierbare Acrylate oder Oligo-/Polmere, die z.B. über Schwefelbrücken nachvernetzen, z.B. PLEX 8770 F von Röhm GmbH & Co. KG.

Zur Illustration der Wirkung des ITOs auf die Viskosität des Lacks wurde die Viskosität eines Lacks ohne ITO mittels Brookfield-Viskosimeter LVT (Adapter A) bestimmt. Man findet eine Viskosität von 4,5 mPa.s. Der gleiche Lack wurde mit dem, bezogen auf Bindemittel, gleichen Gewichtsanteil ITO gefüllt und ebenfalls im Brookfield-Viskosimeter LVT (Spindel 2) bei verschiedenen Umdrehungsgeschwindigkeiten gemessen. Man findet eine deutliche Strukturviskosität:

| **Speed** | **Viskosität / mPa.s** |
|---|---|
| 6 | 3450 |
| 12 | 1900 |
| 30 | 840 |
| 60 | 455 |

Die Zusammensetzung des Lacks betrug:
24,5 Teile ITO
24,5 Teile Acrylatgemisch
50 Teile Isopropanol
0,5 Teile Dispergieradditiv
0,5 Teile Photoinitiator

Der Lack ohne ITO hatte entsprechend eine Zusammensetzung von:
32,45 Teilen Acrylatgemisch
0,66 Teilen Dispergieradditiv
0,66 Teilen Photoinitiator
66,22 Teilen Isopropanol

Als Acrylatgemisch wird eine Mischung aus ca. 40 Masse-% Pentaerythrittritetraacrylat und ca. 60 % Hexandioldiacrylat eingesetzt. Als Dispergieradditiv wird Silan GF 16 der Wacker Chemie eingesetzt. Als Fotoinitiator wird Irgacure 184 verwendet.
Ist die Viskosität des Lacks zu hoch, weil z.B. kein Lösemittel zugesetzt wurde, so gelingt es nicht, eine ausreichende Menge ITO einzudispergieren. Eine Rezeptur aus z.B. 60 Teilen Hexandioldiacrylat, 40 Teilen Pentaerythrittritetraacrylat kann nur mit etwa 30 - 40 Teilen ITO gefüllt werden. Oberhalb dieser Füllstoffmenge ist der Lack so viskos, dass er nicht mehr ohne weitere, geeignete Dispergieradditive verarbeitet werden kann.
Geeignete Auftragstechniken sind z.B. Walzenauftrag und Spritzauftrag. Weniger geeignet ist das Fluten oder Gießen des Lacks.

### Besondere Ausführungsformen:

Der Lack kann durch Auswahl geeigneter Monomere so eingestellt werden, dass eine gute Durchhärtung in Gegenwart von Luft (Luftsauerstoff) gewährleistet ist. Beispiele sind ein Reaktionsprodukt der Umsetzung von Propantrioltriacrylat mit Schwefelwasserstoff (PLEX6696 von Röhm GmbH & Co. KG) Die Lacke härten unter Stickstoffatmosphäre zwar schneller oder mit einer geringeren Menge Photoinitiator, aber die Härtung unter Luft ist möglich wenn z.B. ein geeigneter Photoinitiatior wie Irgacure 907 verwendet wird.

Dies kann z.B. auch dadurch erreicht werden, dass SiO2-Nanopartikel in die Lackmatrix eingearbeitet werden. Geeignete Produkte sind monodisperse Nanopartikel, die z.B. in Form von Organosolen von Fa. Clariant unter dem Namen Highlink OG vertrieben werden. Ebenfalls geeignet sind pyrogene Kieselsäuren, die von Fa. Degussa unter dem Namen Aerosil vertrieben werden. Besonders bevorzugt werden feinteilige destrukturierte pyrogene Kieselsäuren verwendet, da diese die Viskosität von Lacken nur wenig beeinflussen. Zu destrukturierten Kieselsäuren zählen Produkte, die nach dem Aerosilverfahren der Degussa als Aggregate von einige Nanometer bis einige hundert Nanometer große Primärteilchen hergestellt worden sind und durch geeignete Wahl der Herstellungsparameter oder durch Nachbehandlung bezüglich der Teilchengröße ihrer Sekundär- und Tertiärstrukturen weitgehend oder vollständig auf ein Niveau unter hundert Nanometern gebracht worden sind. Produkte, die diesem Eigenschaftsbild genügen, werden in EP 0808880 B1 von Degussa AG beschrieben.

Es wurde gefunden, dass Lacke mit einem Gehalt von 10 bis 40 % (inerten) Nanopartikeln und 20 bis 50 % ITO jeweils bezogen auf Trockenfilm (das ist die Zusammensetzung des Lacks ohne die Lösemittel) gut aushärtbare Lacke ergeben. Die Lacke sind mechanisch stabil und haften gut auf dem Kunststoffsubstrat.

Überraschenderweise haben Lacke mit einem Gehalt an inerten anorganischen Teilchen, wie z.B. SiO2-Nanopartikel oder weitere Nanopartikel auf oxidischer Basis eine gute Haftung und eine unvermindert gute elektrische Leitfähigkeit.

Es wird davon ausgegangen, dass die Füllstoffpartikel die Indiumzinnoxidpartikel quasi in leiterbahnähnliche Strukturen zwingen wodurch die Effektivität der elektrischen Leitung durch Aufkonzentrieren der leitfähigen Partikel verbessert wird. Dadurch kann die ITO-Konzentration bei gleicher Leitfähigkeit reduziert werden.

Die unter dem Namen Highlink OG von Clariant vertriebenen Organosole enthalten mono- oder difunktionelle Monomere, die ggf. weitere funktionelle Gruppen tragen können. Ebenfalls geeignet sind Organosole in organischen Lösemitteln, wie z.B. Alkoholen. Gut geeignete Monomere sind z.B. Hexandioldiacrylat und Hydroxyethylmethacrylat. Die Monomere sollten möglichst geringe Mengen Polymerisationsinhibitor enthalten. Geeignete Stabilisatoren sind Tempol von Fa. Degussa oder Phenothiazin. Im allgemeinen enthalten die Monomere nur Stabilisatorkonzentrationen von < 500 ppm, in einer bevorzugten Ausführungsform < 200 ppm und besonders bevorzugt <100 ppm. Die Stabilisatorkonzentration im beschichtungsfertigen UV-Lack sollte unter 200 ppm liegen, bevorzugt unter 100 ppm und ganz besonders bevorzugt unter 50 ppm bezogen auf reaktive Komponenten. Die gewählte Stabilisatorkonzentration hängt von der Art und Reaktivität der gewählten polymerisationsfähigen Komponenten ab. Besonders reaktive Komponenten wie z.B. manche polyfunktionelle Acrylate oder Acrylsäure benötigen höhere Stabilisatormengen, weniger reaktive Komponenten wie z.B. monofunktionelle Methacrylate benötigen geringere Stabilisatormengen. Als Stabilisator kommt neben Tempol und Phenothiazin auch z.B. Hydrochinonmonomethylether infrage, wobei die ersten beiden auch in Abwesenheit von Sauerstoff wirksam sind und nur in sehr geringer Menge von 10 bis 100 ppm gebraucht werden während letztere Verbindung nur in Gegenwart von Sauerstoff wirkt und in Mengen von 50 bis 500 ppm Verwendung findet.

Durch die Wahl der Zusammensetzung kann der Lack kratzfest, chemikalienbeständig oder flexibel und umformbar eingestellt werden. Der Vernetzergehalt wird hierzu in geeigneter Weise angepasst. Beispielsweise kann mit einem hohen Gehalt an Hydroxyethylmethacrylat die Haftung auf schwierigen Untergründen, wie z.B. gegossenes hochmolekulares PMMA und zugleich die Umformbarkeit verbessert werden. Mit einem höheren Gehalt an Hexandioldiacrylat wird die Chemikalienbeständigkeit und die Kratzfestigkeit erhöht.

Noch bessere Kratzfestigkeit und Chemikalienbeständigkeit wird durch noch höherfunktionelle Monomere wie, z.B. Pentaerythrittritetraacrylat erreicht. Die Zusammensetzung des Lacks wird dabei so variiert, das eine gewünschte Kombination aller geforderten Eigenschaften erhalten wird.

Eine Möglichkeit die Umformbarkeit zu erhöhen und die Haftung zu verbessern ist die Verwendung von oligomeren oder polymeren Komponenten, die entweder reaktiv mit einem Gehalt an Doppelbindungen oder aber nicht-reaktiv gewählt werden können. Durch die Verwendung höhermolekularer Bausteine wird die Vernetzungsdichte und die Schwindung des Lacks beim Aushärten herabgesetzt wodurch im allgemeinen bessere Haftung erzielt wird.

Geeignete polymere Komponenten sind Poly(meth)acrylate, die z.B. aus Methacrylaten und Acrylaten sowie funktionellen Monomeren zusammengesetzt sein können. Polymere mit funktionellen Gruppen können verwendet werden, um einen zusätzlichen Beitrag zur Verbesserung der Haftung zu leisten. Ein Beispiel für ein geeignetes Polymethacrylat ist PLEX 8770 F von Fa. Röhm GmbH & Co.KG mit einer Viskositätszahl J [ml/g] (in CHCl3 b. 20°C): 11 ± 1 als Maß für das Molekulargewicht.

Die oligo- oder polymeren Additive können je nach Molekulargewicht in unterschiedlichen Mengen zugesetzt werden. Höhermolekulare Polymere werden in entsprechend geringeren Mengen und niedermolekularere Produkte in höheren Mengen zugesetzt, so dass die Gesamtviskosität des Lacks eine Verarbeitung erlaubt. Die polymeren Additive wirken zugleich als Verdicker und werden auch dazu benutzt, um die Nanopartikel in der Schwebe zu halten und das unerwünschte Sedimentieren der Partikel nach der Beschichtung zu verhindern.

Auf diese Weise ist gewährleistet, dass die ITO-Konzentration an der Oberfläche, im speziellen in den obersten 200 nm der Schicht, nicht wesentlich geringer als im Bulk oder an der Phasengrenze zum Substrat ist. Ein weiterer wichtiger Aspekt dieser Maßnahme ist die Verbesserung der Substrathaftung durch Zusatz des Verdickers. Eine Erklärung hierfür, die jedoch nicht die Erfindung auf eine bestimmte Theorie festlegen soll, ist die durch den Verdicker bedingte Verringerung der ITO-Konzentration an der Phasengrenze zum Substrat wodurch zugleich die Bindemittelkonzentration an der Phasengrenze vorteilhaft ausreichend hoch gehalten wird, da das Bindemittel zu einer guten Substrathaftung beiträgt. Durch anorganische Füllstoffe wie z. B. ITO wird die Substrathaftung durch Verringerung der Kontaktfläche zwischen Substrat und Bindemittel dagegen verschlechtert, vor allem wenn diese sich durch Sedimentation zur Phasengrenze Lack-Substrat dort anreichern.

### Herstellverfahren:

Wichtig ist, die Lackviskosität so einzustellen, dass eine gute Vermahlung/Dispergierung der ITO-Partikel gewährleistet ist. Dies kann z.B. durch Dispergieren auf der Rollenbank mit Glaskugeln als Mahlkörper geschehen (siehe DE 101 29 374)

Dispergieren von ITO-Nanopartikeln kann im Lack auch durch spezielle kombinierte Rühr- und Dispergieraggregate, die mit einer Zwangsförderung verbunden sind, z.B. Unimix LM6 von Fa. Haagen und Rinau GmbH geschehen. Um mit dem kombinierten Rühr und Dispergieraggregat eine ausreichend gute Verteilung ohne Zerschlagung der ITO-Aggregate zu erreichen, müssen die Rührbedingungen so eingestellt werden, dass die Nanopartikelagglomerate in ausreichend kleine Aggregate zerteilt werden, so dass eine gute Transparenz der Beschichtung gegeben ist. Für eine ausreichende Transparenz sollen Aggregate kleiner als lambda Viertel des sichtbaren Lichts, d.h. nicht größer als 100 nm sein. Wird die Mischung zu stark oder zu lang geschert, so werden Aggregate, die erheblich zur Leitfähigkeit beitragen, zerschlagen und das Perkolationsnetzwerk kann sich nicht mehr richtig aufbauen. Hinweise über den Einfluss der Scherung auf das Perkolationsnetzwerk finden sich z.B. in: "Hans J. Mair, Siegmar Roth (Hrsg.), Elektrisch leitende Kunststoffe, Hanser Verlag, 1986 und in "Ishihara Functional Materials", Technical News, T-200 Electroconductive Materials. Firmenschrift Ishihara;

Ein wesentlicher Punkt der Erfindung ist es daher, die Scherung so einzustellen, dass Aggregate im Perkolationsnetzwerk erhalten bleiben und grobteiligere Agglomerate, die größer als lambda Viertel sind, zerschlagen werden.

Dies gelingt durch Wahl der Dispergiergeräte und Dispergierbedingungen, durch Wahl der geeigneten Viskosität der Zusammensetzung und durch ggf. Zusätze geeigneter Additive.

Geeignete Additive werden z.B. in EP 281 365 (Nippon Oil & Fats) genannt.

### Modell für Stromleitung:

Die antistatische Wirkung kann sich dann optimal entfalten, wenn das Perkolationsnetzwerk aus wie auf einer Perlenkette aufgereihten leitfähigen Partikeln, die sich berühren, aufgebaut wird. Das Kosten-Nutzen-Verhältnis des vergleichsweise teueren ITOs wird dadurch optimiert. Zugleich verbessert sich die Transparenz und vermindert sich der Haze der Beschichtung, da der Gehalt an streuenden Partikeln minimiert werden kann. Die Perkolationsgrenze hängt von der Morphologie der Partikel ab. Kugelförmige Primärpartikel vorausgesetzt wird die Perkolationsgrenze etwa bei 40 Gewichtsprozent ITO erreicht. Setzt man nadelförmige ITO-Partikel ein, so findet ausreichende Berührung der Partikel bereits bei geringerer Konzentration statt. Nadelförmige Partikel haben jedoch den Nachteil einer ungünstigen Wirkung auf die Transparenz und den Haze.

Es ist daher eine Aufgabe der Erfindung durch Verwendung von inerten Nanopartikeln die für die Ausbildung eines Perkolationsnetzwerks erforderliche Menge ITO herabzusetzen. Zugleich leidet die Transparenz des Gesamtsystems nicht unter dem Zusatz der inerten Nanopartikel und es werden weitere günstige Eigenschaften des Systems herbeigeführt, wie z.B. Härtbarkeit unter Luftsauerstoff ohne Verlust der Eigenschaften, größere Härte, bessere Umformbarkeit, gute Substrathaftung.

In den Beispielen wird gezeigt, dass durch Verwendung von Nanopartikeln bereits bei 33 % ITO eine gleich gute Leitfähigkeit wie bei 50 % ITO in Lacken ohne Nanopartikel erreicht wird.

### Beschichtungstechnik:

Die Methode zur Beschichtung muss so gewählt werden, dass der Lack in dünner gleichmäßiger Dicke aufgetragen werden kann. Geeignete Methoden sind z.B. Drahtrakeln, Tauchen, Streichen, Walzen und Spritzen. Nach dem Fachmann bekannten Methoden muss die Viskosität des Lacks so eingestellt werden, dass eine Schichtdicke im Nassfilm nach Verdunsten des ggf. zugesetzten Lösemittels bei 2 - 15 µm liegt. Dünnere Schichten sind nicht mehr kratzfest und können durch herausragen von Metalloxid-Partikeln aus der Lackmatrix einen Matteffekt zeigen. Dickere Schichten sind mit Verlust der Transmission verbunden, bringen keinen Gewinn an elektrischer Leitfähigkeit und sind aus Kostengründen nicht sinnvoll. Es kann jedoch aus Gründen der Abrasion von Lackoberflächen durch ständige mechanische Belastung sinnvoll sein, dickere Schichten einzustellen. In diesem Fall können auch Schichtdicken bis zu 100 µm eingestellt werden. Dabei muss ggf. die Viskosität des Lacks für die Herstellung der dicken Schichten erhöht werden.

### Aushärtung:

Um ausreichende Durchhärtung zu erreichen, ist auch die Art und Konzentration des Photoinitiators anzupassen. Ggf. sind Kombinationen von Photoinitiatoren notwendig, um ausreichende Oberflächen und Tiefenhärtung des Lacks zu erhalten. Insbesondere bei hohen Füllgraden mit Metalloxidpartikeln ist die Kombination von konventionellen Photoinitiatoren (z.B. Irgacure 1173 oder Irgacure 184 von Ciba) mit Photoinitiatoren, die im längerwelligen Bereich absorbieren, (z.B. Lucirin TPO oder Lucirin TPO-L von BASF) sinnvoll, um ausreichende Tiefenhärtung zu erhalten. Bei transparenten Substraten ist es ggf. sinnvoll das beschichtete Substrat von der Ober- und Unterseite durch Bestrahlung mit versetzten UV-Strahlen zu härten. Erforderliche Initiatorkonzentrationen liegen zwischen 0,5 %, bis zu 8 %, bevorzugt von 1,0 bis 5 % und ganz besonders bevorzugt zwischen 1,5 und 3 % Photoinitiator. Hierbei ist bei Härtung unter Inertgas eine Photoinitiatormenge von 0,5 - 2 % bezogen auf Acrylat ausreichend, während bei Härtung unter Luft Mengen zwischen 2 und 8 %, bevorzugt 4 - 6 % erforderlich sind. Vorteilhaft ist eine möglichst geringe Initiatorkonzentration einzusetzen, um möglichst wenig Zerfallsprodukte im Lack zu haben, da diese die Langzeitwitterungsstabilität negativ beeinflussen. Auch aus wirtschaftlichen Gründen ist der Einsatz einer möglichst geringen Initiatormenge sinnvoll.

Alternativ zur Härtung mit UV-Strahlen ist auch eine Härtung der Beschichtung mit anderen energiereichen Strahlen möglich. Eine geeignete Methode ist die Bestrahlung mit Elektronenstrahlen. Vorteil dieses Verfahrens gegenüber UV-Strahlen ist die gute Durchhärtung dicker Schichten und die Möglichkeit schneller, in Gegenwart von atmosphärischem Sauerstoff und auch ohne Photoinitiatoren härten zu können. Die Strahlungsenergie muss so eingestellt werden, dass bei ausreichender Härtung der Schicht keine Schädigung des Substrats oder Vergilbung eintritt.

### Schrumpfarme Rezepturen:

Ein wesentlicher Aspekt der Erfindung ist die schrumpfarme Härtung des Lacks. Naturgemäß schrumpfen UV-härtbare Lacke bei der Strahlenhärtung wodurch die Lackoberfläche ungünstig beeinflusst werden kann und die Haftung zum Substrat verloren gehen kann. Durch geschickte Auswahl des Verhältnisses von mono-, di- und polyfunktionellen Monomeren bzw. Oligomeren, anorganischen und polymeren Füllstoffen und Additiven kann die Schwindung des Lacks auf ein Mindestmaß herabgesetzt werden. Inerte Füllstoffe, die sich nicht an der Polymerisation beteiligen, wie z.B. Metalloxide, beispielsweise Indiumzinnoxid, Siliziumdioxid, oder nichtreaktive polymere Bestandteile setzen den Gesamtschrumpf einer Zusammensetzung herab, während monovalente Monomere und Oligomere moderat schrumpfen und polyvalente Monomere den größten Beitrag zum Schrumpf liefern.

Eine schrumpfarme Rezeptur kann z.B. dadurch erhalten werden, dass der Anteil der polyvalenten Komponenten ein gewisses Niveau nicht überschreitet. Bei dieser Betrachtung muss der Zusammenhang zwischen Molekulargewicht, Anzahl der funktionellen Gruppen und Schwindung beachtet werden. Polyvalente Komponenten mit niedrigem Molekulargewicht haben naturgemäß den höchsten Schrumpf während monovalente Komponenten mit höherem Molekulargewicht den geringsten Beitrag zur Schwindung liefern.

Beispiele für schrumpfarme Rezepturen sind Zusammensetzungen aus:

### Beispiel 1:

100 Teilen Lösemittel, z.B. Ethanol oder Isopropanol
35 Teilen Hydroxyethylmethacrylat
15 Teilen SiO2-Nanopartikeln ¹⁾
50 Teilen Indiumzinnoxid-Nanopartikeln
2 Teilen Photoinitiator
und ggf. weiteren Additiven

Man erhält gut haftende Beschichtungen mit einer gewissen Flexibilität. So lassen sich z.B. damit beschichtete PMMA-Folien bis zu einem gewissen Grad verformen oder einbiegen. Die SiO2-Nanopartikel lassen sich z.B. in Form eines Organosols von anorganischen Nanopartikeln in Hydroxyethylmethacrylat, das von der Firma Clariant unter dem Namen Highlink OG vertrieben wird, einsetzen. Die Beschichtungen mit der genannten Rezeptur sind mechanisch stabil, jedoch nicht kratzfest. Die Kratzfestigkeit derartiger Beschichtungen lässt sich durch Ersatz eines Teils des Organosols durch di- oder polyfunktionelle Acrylate erhöhen. Ein Beispiel für eine kratzfeste schrumpfarme Rezeptur ist folgende Zusammensetzung:

### Beispiel 2:

100 Teile Lösemittel, z.B. Ethanol oder Isopropanol
17,5 Teilen Hydroxyethylmethacrylat
7,5 Teilen SiO2-Nanopartikeln ¹⁾
25 Teilen Hexandioldiacrylat
50 Teilen Indiumzinnoxid-Nanopartikeln
2 Teilen Photoinitiator
und ggf. weiteren Additiven

### 1) als Organosol Highlink OG 100-31 mit 100 ppm Stabilisator (Hersteller Clariant)

Voraussetzung für eine gute Härtung ist die Verwendung eines Organosols mit einem besonders niedrigen Gehalt an Stabilisator. So wurde bei den genannten Beispielen jeweils ein Organosol mit 100 ppm Stabilisator Tempol® bzw. Stabilisator Phenothiazin eingesetzt. Gegenüber dem Lack mit handelsüblichem hochstabilisierten Organosol (500 ppm Phenothiazin) erhält man eine gute Haftung (Gitterschnitt GT = 0) und eine gute Härtung unter Inertgas (Stickstoff) sowie unter Luftatmosphäre.

Um den Gehalt an Stabilisator im Lack möglichst gering zu halten, kann alternativ auch ein stabilisatorfreies Organosol von SiO2-Nanopartikeln in organischen Lösemitteln, z.B. Alkoholen zum Einbringen der Nanopartikel in die Lackmatrix eingesetzt werden.

### Einfluss der Aushärtebedingungen auf die Schwindung:

Die Schwindung lässt sich außer über die Rezeptur auch durch Wahl geeigneter Aushärtebedingungen beeinflussen. Günstig ist eine langsame Härtung mit vergleichsweise geringer Bestrahlungsenergie, während bei schneller Härtung und großer Bestrahlungsenergie ein höherer Schrumpf beobachtet wird.

Günstige Härtungsbedingungen hat man bei Verwendung eines Strahlers F450 der Firma Fusion mit 120 Watt/cm und fokussiertem Strahl bei einer Vorschubgeschwindigkeit von 1 - 3 m/min und einem Gehalt von 2 % Photoinitiator unter Stickstoffatmosphäre.

### Kratzfestigkeit der Lacke:

Ein weiteres Merkmal der Erfindung ist die gute Kratzfestigkeit der antistatischen Lacke. Wählt man die beschriebenen Härtungsbedingungen, so lassen sich kratzfeste antistatische Lacke mit geringer Schwindung und guter Haftung herstellen.

Erfindungsgemäße Lacke mit einem Gehalt von 33 bis 50 % ITO erreichen unter diesen Bedingungen Kratzfestigkeiten von Delta Haze < 2 % nach Prüfung auf dem Taber Abraser mit Reibrädern CS 10F und 5,4 N Gewichtsauflage bei 100 Umdrehungen.

### Chemikalienbeständigkeit der Lacke

Die erfindungsgemäßen Lacke haben eine gute Beständigkeit gegenüber Chemikalien, z.B. anorganischen Säuren und Laugen bei kurzer Einwirkdauer, zahlreichen organischen Lösemitteln, wie Estern, Ketonen, Alkoholen, aromatischen Lösemitteln. Mit den erfindungsgemäßen Lacken beschichtete Kunststoffformkörper können z.B. mit diesen Lösemitteln bei Bedarf gereinigt werden.

### Witterungsbeständigkeit und Rezeptur:

Ein besonderer Vorteil der Verwendung stabilisatorarmer Formulierungen ist die Möglichkeit unter Luftatmosphäre aushärten zu können und dadurch Kosten für Inertisierung (apparativer Aufwand und laufende Kosten für Inertgasverbrauch) zu reduzieren. Ein weiterer Vorteil ist mit vergleichsweise kleinen Mengen Photoinitiator bereits eine gute Durchhärtung zu erreichen. Die in den Beispielen genannten Formulierungen sowie Formulierungen, bei denen keine SiO2-Nanopartikel eingesetzt worden sind und anstelle der Organosole mono- oder polyfunktionelle Monomere bzw. Mischungen derselben verwendet wurden, lassen sich mit jeweils 2 % Photoinitiator, wie z.B. Irgacure 184, Irgacure 1173, Irgacure 907 oder Mischungen derselben zu kratzfesten und witterungsbeständigen Formulierungen härten.

### Beispiel 3:

100 Teile Lösemittel, z.B. Ethanol oder Isopropanol
40 Teile Pentaerythrittritetraacrylat
60 Teile Hexandioldiacrylat
50 Teilen Indiumzinnoxid-Nanopartikeln
5 Teile SiO2-Nanopartikel
2 Teilen Photoinitiator
und ggf. weiteren Additiven

### Beispiel 4:

Wie Beispiel 3, jedoch:
5 Teile PLEX 8770 (Verdicker)
20 Teile Pentaerythrittritetraacrylat
75 Teile Hexandioldiacrylat

Die zuvor genannten Formulierungen können zur Erhöhung der Witterungsbeständigkeit noch mit UV-Schutzmitteln versetzt werde. Dabei ist darauf zu achten, dass das UV-Schutzmittel die Strahlenhärtung nicht behindert.

In einer bevorzugten Ausführungsform der Erfindung wird mit Elektronenstrahlen gehärtet. Dadurch wird vermieden, dass ungünstige Wechselwirkungen zwischen UV-Absorber und UV-Licht auftreten.

Wird eine UV-Lampe als Strahlenquelle eingesetzt, so kann z.B. ein langwelliges UV-Licht in Kombination mit einem Photoinitiator, der im langweiligen Bereich des Spektrums oder im sichtbaren Bereich des Spektrums absorbiert eingesetzt werden. Der UV-Absorber darf im Absorptionsbereich des Photoinitiators nicht vollständig absorbieren, damit eine für die Strahlenhärtung ausreichende Menge an energiereichem Licht in den Lack gelangt.
Soll mit konventionellen UV-Lampen, z.B. System Fusion oder IST Strahlentechnik gearbeitet werden, so kann ein UV-Absorber verwendet werden, der ein ausreichend großes Fenster im Absorptionsbereich für die Transmission von UV-Strahlen zur Anregung des Photoinitiators bietet. Geeignete UV-Absorber sind Norbloc 7966, Tinuvin 1130.

Durch die Kombination der erwähnten Maßnahmen, insbesondere durch die Verwendung von geringen Mengen Photoinitiator ist es möglich wetterechte langlebige Beschichtungen herzustellen. Die geringe Menge Photoinitiator bedingt einen geringen Gehalt an Spaltprodukten wodurch kaum Angriffsstellen für die Migration derselben gegeben sind. Die genannten Lacke überstehen daher den künstlichen Bewitterungsschnelltest (Xenotest nach DIN Nr.) über 5000 Stunden ohne ihre Haftung, Kratzfestigkeit und gute Transmission zu verlieren.

Der Kunststoffformkörpers kann als Verglasung oder Verglasungselement, für Einhausungen, für die Ausstattung von Reinräumen im medizinischen, biologischen oder mikroelektronischen Bereich, für Maschinenabdeckungen, für Inkubatoren, für Displays, für Bildschirme und Bildschirmabdeckungen, für Rückprojektionsschirme, für medizinische Apparaturen und für Elektrogeräte als Abschirmung verwendet werden.

### Weitere Anwendungen

Außer für transparente Anwendungen können antistatische Beschichtungen auch auf nichttransparenten Substraten eingesetzt werden. Beispiele sind: antistatisch ausgerüstete Kunststofffußböden, allgemein die Laminierung antistatischer, kratzfester Folien auf Substrate wie z.B. Holz, Papierdekore. Eine weitere Anwendung ist die Beschichtung von Dekorpapieren mit Aushärtung unter Elektronenstrahlen. Weitere Anwendungsbeispiele für solche Systeme sind z.B. Displays für Mobiltelefone, wobei die Folie abgekantet oder verformt werden kann, ohne dass die Schicht ihre Haftung verliert. Ein anderes Beispiel ist ein Laminat aus einer Kunststofffolie auf einem nicht-flexiblen flachen oder dreidimensionalen Substrat oder auf einer ggf. flexiblen Substratfolie. Solche Folien können z.B. als Dekorfolien eingesetzt werden.

### Teilchengrößenbestimmung mittels PCS (nach Ultraschall)

### 1. Reagenzien

destilliertes oder vollentsalztes Wasser, pH > 5.5

### 2. Geräte

Labordissolver LR 34 mit Drehzahlmesser, Fa. Pendraulik, 31832 Springe 1 Dispergierscheibe, Durchmesser 40 mm
   Ultraschall-Prozessor UP 400 S, Fa. Dr. Hielscher, 70184 Stuttgart Sonotrode H7 aus Titan, 7 mm Durchmesser
   Partikelgrößenanalysator HORIBA LB-500, Fa. Retsch Technology, 42781 Haan
   mit Acryl-Einwegküvetten 1,5 ml
   Dose Hoechst, Ident-Nr. 22926, 250 ml Inhalt, DD-PE, natur 0/0021, Hoechst AG
   Abt. EK-Verpackung V, Brüningstr. 64, 65929 Frankfurt-Hoechst Deckel für Dose, 250 ml, Ident-Nr. 22918
Pasteur-Pipetten, 3,5 ml, 150 ml lang, Best.-Nr. 1-6151
Präzisionswaage (Ablesbarkeit 0,01 g)

### 3. Herstellen einer 1 %igen Dispersion

Die Pulver-Probe (ca. 10-100 g) wird im Vorratsgefäß durch Schütteln mit der Hand
(30 sec) homogenisiert. Zur Entlüftung lässt man die Probe mindestens 10 Min. stehen.

Die Einwaage des Pulvers erfolgt auf der Präzisionswaage (Ablesbarkeit 0,01 g). Es werden 1 g Pulver (+/- 0,02 g) in die PE-Dose gefüllt und mit VE-Wasser auf 100 g
(+/- 0,02 g) aufgefüllt.

### Dispergieren der Probe

Die Probe wird mit dem Labordissolver fünf Minuten bei 2000 U/min im abgedecktem Polybecher vordispergiert, anschließend wird vier Minuten mit Ultraschall bei einer Amplitude von 80 % und Cycle = 1 dispergiert.

### 4. Ermittlung der Teilchenverteilung

**Theorie:** Die Prüfmethode beschreibt die Bestimmung der Teilchengrößenverteilung mittels Photonenkorellationsspektroskopie (PCS, "dynamische Lichtstreuung"). Die Methode ist besonders geeignet, Teilchen und deren Aggregate im Submikrometer-Bereich zu messen (10 nm bis 3 µm). Das verwendete Gerät HORIBA LB-500 verwendet eine rückstreuende Optik, bei der das Verhältnis zwischen Einfach- und Mehrfachstreuung fast konstant ist und sich somit vernachlässigen lässt. Aus diesem Grund können auch Dispersionen mit höheren Konzentrationen vermessen werden, ohne dass Fehlmessungen auftreten. Zur genauen Bestimmung der Teilchengrößenverteilung müssen folgende Parameter bekannt sein:
- Temperatur der Dispersion: Eine konstante Temperatur ist wichtig, um Konvektionsbewegung innerhalb der Küvette auszuschließen, welche die freie Bewegung der Partikel überlagern würde. Das HORIBA LB-500 misst die Temperatur in der Küvette und berücksichtigt die gemessene Temperatur bei der Auswertung.
- Viskosität des Dispersionsmediums: Bei verdünnten Systemen unkritisch, da die Viskositäten z.B. bei 25°C der reinen Lösungsmittel gut bekannt sind. Zu hohe Konzentrationen sind dann problematisch, wenn die Viskosität der Dispersion die der flüssigen Phase (meist Wasser) übersteigt, da dann die Bewegung der Teilchen eingeschränkt wird. Aus diesem Grund werden die Messungen meist bei ca. 1 % Feststoffkonzentration durchgeführt.
- Brechungsindex von Teilchen und Dispersionsmedium: Diese Angaben sind für einen Großteil von Feststoffen und Lösungsmitteln in der Software von HORIBA aufgelistet.
- Die Dispersion muss sedimentationsstabil sein. Sedimentation in der Küvette erzeugt nicht nur zusätzliche Bewegung der Teilchen, sondern durch sie verändert sich die Streulichtintensität während der Messung. Außerdem verarmt die Dispersion damit an größeren Teilchen, die sich am Boden der Küvette ansammeln.

Messung: Das Messgerät wird über ein Computerprogramm gesteuert, welches auch die Auswertung des Messsignals durchführt und das Abspeichern und Ausdrucken der Messergebnisse erlaubt.

Vor jeder Messung/Messreihe müssen innerhalb der Software folgende Einstellungen vorgenommen werden:
- Eingabe der Brechungsindices von Partikel und Medium
- Eingabe der Viskosität des Dispersionsmediums
- Bezeichnung und Kommentare zur Probe

Die mit Dissolver und Ultraschall dispergierte Probe wird mittels Pasteur-Pipette in die 1,5 ml Acrylglas-Einwegküvette überführt. Nachdem diese in die Messkammer des PCS-Gerätes gesteckt und der Temperaturfühler von oben in die Dispersion eingeführt wurde, startet man die Messung mit Hilfe der Software (Button "Messung"). Nach einer Wartezeit von 20 s öffnet sich das Fenster "Messanzeige", in der alle 3 Sekunden die aktuelle Teilchenverteilung angezeigt wird. Ein nochmaliges Drücken des Messbuttons im Fenster Messanzeige startet die eigentliche Messung. Je nach Voreinstellung wird die Teilchenverteilung mit diversen Messergebnissen (z.B. d50, d10, d90, Standardabweichung) nach 30-60 s angezeigt. Bei stark schwankenden d50-Werten (z.B. 150 nm +/- 20 %; dies kann bei sehr breiten Verteilungen auftreten), werden ca. 6 - 8 Messungen durchgeführt, ansonsten genügen 3 - 4.

### 5. Angabe des d50-Wertes

Es wird der Mittelwert (ohne Dezimalstellen) aller gemessenen d50-Werte, ausschließlich eines offensichtlichen Ausreißers in nm angegeben.

## Patentansprüche

1. Verfahren zur Herstellung von Formkörpern aus Kunststoffen, indem man einen Formkörper ein- oder mehrseitig mit einem Lacksystem beschichtet, das Lacksystem besteht aus:
a) einem Bindemittel oder einer Bindemittelmischung,
b) optional einem Lösungsmittel oder Lösungsmittelgemisch,
c) optional weiteren, in Lacksystemen gebräuchlichen Additiven und
d) einem Verdicker, wobei polymere Verdicker mit einem Gehalt von 0 bis 20 % und oligomere Verdicker mit einem Gehalt von 0 bis 40 %, jeweils bezogen auf Trockenfilm, eingesetzt werden können (Komponenten a, c, d, e),
e.) einem reaktiven Verdicker, wobei polymere reaktive Verdicker mit einem Gehalt von 0 bis 20 % und oligomere reaktive Verdicker mit einem Gehalt von 0 bis 40 %, jeweils bezogen auf Trockenfilm, eingesetzt werden können (Komponenten a, c, d, f),
f) 5 - 500 Masse-Teilen, bezogen auf a) eines elektrisch leitfähigen Metall-Oxids in Form eines Pulvers, einer Dispersion und/oder eines Sols mit einer mittleren Primärteilchengröße von 1 bis 80 nm und einem Aggregationsgrad von prozentual 0,01 bis 99%,
g) 5 - 500 Masse-Teile, bezogen auf a) an inerten Nanopartikeln,
in an sich bekannter Weise beschichtet und den Lack aushärtet.

2. Verfahren nach Anspruch 1,
**dadurch gekennzeichnet,**
**dass** der Lack a) - c) eine Viskosität von 5 bis 500 mPa.s aufweist (gemessen am Brookfield-Viskosimeter LVT).

3. Verfahren nach Anspruch 1,
**dadurch gekennzeichnet,**
**dass** das Lacksystem (Komponente a) - e) nach Anspruch 1) eine Viskosität von 150 bis 5000 mPa.s aufweist.

4. Verfahren nach Anspruch 1,
**dadurch gekennzeichnet,**
**dass** als inerte Nanopartikel SiO₂-Nanopartikel verwendet werden.

5. Verfahren nach Anspruch 1,
**dadurch gekennzeichnet,**
**dass** als elektrisch leitfähige Partikel eine Mischung aus ITO und/oder Antimonzinnoxid ATO und /oder dotiertem ITO verwendet wird.

6. Kunststoffformkörper, erhältlich nach einem Verfahren der Ansprüche 1 bis 5,
**dadurch gekennzeichnet,**
**dass** der Kunststoffformkörper aus PMMA, PC, PET, PET-G, PE, PVC, ABS oder PP besteht.

7. Verwendung des Kunststoffformkörpers nach Anspruch 6 als Verglasung, für Einhausungen, für die Ausstattung von Reinräumen, für Maschinenabdeckungen, für Inkubatoren, für Displays, für Bildschirme und Bildschirmabdeckungen, für Rückprojektionsschirme, für medizinische Apparaturen und für Elektrogeräte.

8. Verfahren nach Anspruch 1,
**dadurch gekennzeichnet,**
**dass** der Verdicker d.) ein reaktiver Verdicker ist.

## Claims

1. Process for producing mouldings from plastics, by coating a moulding on one or more sides with a lacquer system, the lacquer system being composed of:
a) a binder or a binder mixture
b) optionally a solvent or solvent mixture
c) optionally other additives usual in lacquer systems and
d) a thickener, and use can be made here of polymeric thickeners at from 0 to 20% content and oligomeric thickeners at from 0 to 40% content, in each case based on dry film (components a, c, d, e)
e) a reactive thickener, and use can be made here of polymeric reactive thickeners at from 0 to 20% content and oligomeric reactive thickeners at from 0 to 40% content, in each case based on dry film (components a,c,d,f)
f) from 5 to 500 parts by weight, based on a), of an electrically conductive metal oxide, a powder, a dispersion and/or a sol with a median primary particle size of from 1 to 80 nm and a percentage degree of aggregation of from 0.01 to 99%
g) from 5 to 500 parts by weight, based on a), of inert nanoparticles.
coated in a manner known per se and the lacquer cured.

2. Process according to Claim 1,
**characterized in that**
the lacquer a) - c) has a viscosity of from 5 to 500 mPa.s (measured in a Brookfield LVT viscometer).

3. Process according to Claim 1,
**characterized in that**
the lacquer system (component a) - e) according to Claim 1) has a viscosity of from 150 to 5000 mPa.s.

4. Process according to Claim 1,
**characterized in that**
inert nanoparticles used comprise SiO₂ nanoparticles.

5. Process according to Claim 1
**characterized in that**
the electrically conductive particles used comprise a mixture composed of ITO and/or antimony tin oxide ATO and/or of doped ITO.

6. Plastics moulding, obtainable by a process of Claims 1 to 5,
**characterized in that**
the plastics moulding is composed of PMMA, PC, PET, PET-G, PE, PVC, ABS or PP.

7. Use of the plastics moulding according to Claim 6 as glazing, for encasing structures, for equipping cleanrooms, for machine covers, for incubators, for displays, for visual display screens and visual-display-screen covers, for back-projection screens, for medical apparatus, and for electrical devices.

8. Process according to Claim 1,
**characterized in that**
the thickener d.) is a reactive thickener.

## Revendications

1. Procédé de préparation de corps moulés en matières plastiques, dans lequel on applique sur un corps moulé, sur une ou plusieurs faces, un système de peintures, le système de peintures étant constitué :
a) d'un liant ou d'un mélange de liants,
b) en option, d'un solvant ou d'un mélange de solvants,
c) en option, d'autres additifs usuels dans les systèmes de peintures, et
d) d'un épaississant, auquel cas on peut utiliser des épaississants polymères en une quantité de 0 à 20 % et des épaississants oligomères en une quantité de 0 à 40 %, dans les deux cas par rapport au feuil sec (composants a, c, d, e),
e) d'un épaississant réactif, auquel cas on peut utiliser des épaississants réactifs polymères en une quantité de 0 à 20 % et des épaississants réactifs oligomères en une quantité de 0 à 40 %, dans les deux cas par rapport au feuil sec (composants a, c, d, f),
f) de 5 à 500 parties en masse, par rapport à a), d'un oxyde métallique conducteur de l'électricité, d'une poudre, d'une dispersion et/ou d'un sol ayant une granulométrie primaire moyenne de 1 à 80 nm et un degré d'agrégation en pourcentage de 0,01 à 99 %,
g) de 5 à 500 parties en masse, par rapport à a), de nanoparticules inertes,
on le revêt d'une manière connue en soi, et on durcit la peinture.

2. Procédé selon la revendication 1, **caractérisé en ce que** la peinture a)-c) présente une viscosité de 5 à 500 mPa.s (mesurée au viscosimètre Brookfield LVT).

3. Procédé selon la revendication 1, **caractérisé en ce que** le système de peintures (composants a)-e) selon la revendication 1) présente une viscosité de 150 à 5000 mPa.s.

4. Procédé selon la revendication 1, **caractérisé en ce qu'**on utilise en tant que nanoparticules inertes des nanoparticules de SiO₂.

5. Procédé selon la revendication 1, **caractérisé en ce qu'**on utilise en tant que particules conductrices de l'électricité un mélange d'ITO et/ou d'oxyde d'antimoine et d'étain ATO et/ou d'ITO dopé.

6. Corps moulé en matière plastique pouvant être obtenu par un procédé selon les revendications 1 à 5, **caractérisé en ce que** le corps moulé en matière plastique est constitué de PMMA, de PC, de PET, de PET-G, de PE, de PVC, d'ABS ou de PP.

7. Utilisation du corps moulé en matière plastique selon la revendication 6 en tant que vitrage, pour des enceintes d'insonorisation, pour l'équipement de salles blanches, pour les capots des machines, pour les incubateurs, pour les dispositifs d'affichage, pour les écrans et capots d'écran, pour les écrans de rétroprojection, pour les appareils médicaux et les appareils électriques.

8. Procédé selon la revendication 1, caractérisé en ce l'épaississant d.) est un épaississant réactif.
